# EUROPÄISCHE PATENTANMELDUNG

(11) **EP 0 906 895 A1**
(43) Veröffentlichungstag der Anmeldung: **07.04.1999**
(21) Anmeldenummer: 98110609.9
(22) Anmeldetag: 10.06.1998
(51) Int. Cl.: C04B 26/14

(54) **Epoxidharz-gebundener Estrich und Verfahren zur Herstellung desselben**

(30) Priorität: 12.06.1997 DE 19724824
(71) Anmelder: Gebr. Knauf Westdeutsche Gipswerke, D-97343 Iphofen (DE)
(72) Erfinder: Rümler, Wolfgang, Dr. Dipl.-Chem., 91413 Neustadt/Aisch (DE); Seifert, Andres, Dipl.-Ing., 97318 Kitzingen (DE)
(74) Vertreter: Werner, Hans-Karsten, Dr.Dipl.-Chem.

(57) **Zusammenfassung**

Der Estrich besteht aus mit Epoxidharz verklebtem Sand, wobei der Sand eine breite Korngrößenverteilung im Bereich von 0,1 bis 8 mm aufweist, aus überwiegend runden Körnern besteht, die eine überwiegend glatte Oberfläche aufweisen und das Verhältnis Sand zu Epoxidharz im Bereich 20:1 bis 40:1 liegt.

## Beschreibung

Gegenstand der vorliegenden Erfindung sind ein Estrich bestehend aus mit Epoxidharz verklebtem Sand und Verfahren zur Herstellung des Estriches.

Estriche werden in überwiegendem Maße aus hydraulisch abbindenden mineralischen Gemischen hergestellt, wobei die Abbindekomponente meistens Zement und/oder abbindefähiges Calciumsulfat ist. Diese Estriche haben sich zwar bewährt, benötigen aber eine relativ lange Austrocknungszeit. Im Industriebodenbereich werden darüber hinaus Estriche aus mit Epoxidharz verklebtem Sand hergestellt, wobei das Verhältnis Sand zu Epoxidharz im Bereich 5:1 bis 10:1 liegt. Wegen dieses hohen Epoxidharz-Anteils sind derartige Estriche so teuer und werden daher nur dort verlegt, wo besondere Anforderungen an die technischen Eigenschaften einerseits und das rasche Abbinden andererseits gestellt werden. Derartige Estriche im Industriebodenbereich erreichen Druckfestigkeiten von 80 N/mm² und Biegezugfestigkeiten von ca. 30 N/mm².

Im konventionellen Estrichbereich, beispielsweise im Wohnungsbau, reichen Biegezugfestigkeiten von 4 bis 8 N/mm², so daß vor allem die hydraulisch abbindenden Estriche zum Einsatz kommen. Ein wesentlcher Nachteil ist aber, daß sie nach 24 Stunden aufgrund der Restfeuchtigkeit noch nicht belegereif sind.

Die Erfindung hat sich somit die Aufgabe gestellt, einen rasch abbindenden Estrich zur Verfügung zu stellen, der nach 24 Stunden bedingungslos begangen und belegt werden kann und preislich mit hydraulisch abbindenden Schnell-Estrichen oder Asphalt-Estrichen wettbewerbsfähig ist.

Diese Aufgabe wird gelöst durch einen Estrich bestehend aus mit Epoxidharz verklebtem Sand, der dadurch gekennzeichnet ist, daß der Sand eine breite Korngrößenverteilung im Bereich von 0,1 bis 8 mm, vorzugsweise 0,1 bis 3 mm aufweist, aus überwiegend runden Körnern besteht, die eine überwiegend glatte Oberfläche aufweisen und das Verhältnis Sand zu Epoxidharz im Bereich 20:1 bis 40:1 liegt. Vorzugsweise liegt das Verhältnis Sand zu Epoxidharz im Bereich 25:1 bis 30:1.

Es hat sich gezeigt, daß Sand dieser Spezifikation auch mit einem sehr niedrigen Gehalt von Epoxidharz ausreichende Festigkeiten und Biegezugfestigkeiten entwickelt und obendrein so rasch abbindet, daß er nach 24 Stunden bedingungslos begangen und belegt werden kann. Sande dieser Spezifikation finden sich vorzugsweise in abgelagerten Flußsanden. Flußsande bestehen aufgrund des langen Schleif- und Transportweges unter Wasser überwiegend aus runden Körnern und weisen eine überwiegend glatte Oberfläche auf. Sie sind auch im Gegensatz zu Sanden an Stränden nicht windgesichtet, so daß sie die breite Korngrößenverteilung aufweisen. Die erfindungsgemäß einsetzbaren Sande sollen möglichst geringfügig mit organischen Substanzen, Ton oder Schluff verunreinigt sein. Gegebenenfalls sind sie durch geeignete Wasch- und Reinigungsvorgänge diesbezüglich aufzuarbeiten. Diese Sande sind darüber hinaus vor dem Gebrauch zu trocknen, damit das Epoxidharz eine gute und feste Verbindung mit der Oberfläche eingehen kann.

Das Verfahren zur Herstellung des Estrichs bestehend aus mit Epoxidharz verklebtem Sand erfolgt dadurch, daß ein Sand mit breiter Korngrößenverteilung im Bereich von 0,1 bis 8 mm, vorzugsweise 0,1 bis 3 mm, der aus überwiegend runden Körnern besteht, die eine überwiegend glatte Oberfläche aufweisen, mit einem Zweikomponenten-Epoxidharz im Verhältnis 20:1 bis 40:1 vermischt und in üblicher Weise als Estrich aufgetragen wird, wobei die Komponenten des Epoxidharzes eine niedrige Viskosität im Bereich 50 bis 2.000 mPa.s aufweisen.

Zur Durchführung des Verfahrens werden die Komponenten des Epoxidharzes miteinander vermischt und dann mit dem erfindungsgemäß verwendbaren Sand angerührt. Hierzu können übliche Mischgeräte wie Zwangsmischer, Fallmischer etc. eingesetzt werden. Das fertige Gemisch wird in an sich bekannter Weise als Estrich aufgetragen und bindet in der Zeit ab, auf die das Epoxidharz eingestellt ist. Dies sind im allgemeinen Zeiten zwischen 15 und 120 Minuten. Selbst langsam abbindende Epoxidharze sind nach 24 Stunden so ausgehärtet, daß ein daraus hergestellter erfindungsgemäßer Estrich begangen und belegt werden kann.

In dem nachfolgenden Beispiel sind der neue Estrich und das Verfahren zu seiner Herstellung näher erläutert:

### Beispiel

Getrockneter Sand aus der Grube Wörbzig (bei Köthen) weist ein Schüttgewicht lose von 1640 kg/m³ auf. Gestampft beträgt das Schüttgewicht 1820 kg/m³. Die Korngrößenverteilung dieses aus überwiegend runden Körnern bestehenden Sandes mit glatten Oberflächen beträgt:

| | |
|---|---|
| > 2000 µm | 2,9% |
| > 1500 µm | 9,6% |
| > 1250 µm | 10,8% |
| > 1000 µm | 16,4% |
| > 800 µm | 24,9% |
| > 500 µm | 43,9% |
| > 315 µm | 66,4% |
| > 200 µm | 93,2% |
| > 90 µm | 99,8%. |

Dieser Sand läßt sich mit einem für den Industriebodenbereich bewährten Zweikomponenten-Epoxidharz im Verhältnis 25:1 mischen und als Estrich verlegen. Sofern die Komponenten des Epoxidharzes auf eine niedrige Mischviskosität im Bereich 50 bis 5.000 mPa.s eingestellt sind, benetzen sie den Sand so gut, daß ohne weiteres das Verhältnis auf 30:1 abgemagert werden kann und dennoch eine allseitige und haltbare Verklebung des Sandes erfolgt. Diese Estriche sind nach 24 Stunden problemlos begeh- und belegbar. Das Raumgewicht dieser Estriche beträgt in einem Prisma (4x4x16) 1850 kg/m³. Die Biegezugfestigkeit beträgt nach 14 Tagen und 20°C 8,7 N/mm².

Die Verwendung von abgelagerten Flußsanden vergleichbarer Korngrößenverteilung ergibt bei einem Verhältnis Sand zu Epoxidharz im Bereich 25:1 bis 30:1 vergleichbare Werte bezüglich Raumgewicht und Biegezugfestigkeit.

## Patentansprüche

1. Estrich bestehend aus mit Epoxidharz verklebtem Sand, dadurch gekennzeichnet, daß der Sand eine breite Korngrößenverteilung im Bereich von 0,1 bis 8 mm aufweist, aus überwiegend runden Körnern besteht, die eine überwiegend glatte Oberfläche aufweisen und das Verhältnis Sand zu Epoxidharz im Bereich 20:1 bis 40:1 liegt.

2. Estrich gemäß Anspruch 1, dadurch gekennzeichnet, daß die Korngrößenverteilung im Bereich 0,1 bis 3 mm liegt.

3. Estrich gemäß Anspruch 1 oder 2, dadurch gekennzeichnet, daß das Verhältnis Sand zu Epoxidharz im Bereich 25:1 bis 30:1 liegt.

4. Estrich gemäß einem der Ansprüche 1 bis 3, dadurch gekennzeichnet, daß das Raumgewicht des fertigen Estrichs über 1800 kg/m³ liegt.

5. Verfahren zur Herstellung eines Estrichs bestehend aus mit Epoxidharz verklebtem Sand, dadurch gekennzeichnet, daß ein Sand mit breiter Korngrößenverteilung im Bereich von 0,1 bis 8 mm, vorzugsweise 0,1 bis 3 mm, der aus überwiegend runden Körnern besteht, die eine überwiegend glatte Oberfläche aufweisen, mit einem Zweikomponenten-Epoxidharz im Verhältnis 20:1 bis 40:1 vermischt und in üblicher Weise als Estrich aufgetragen wird, wobei die Komponenten des Epoxidharzes eine niedrige Viskosität im Bereich 50 bis 2.000 mPa.s aufweisen.

6. Verfahren gemäß Anspruch 5, dadurch gekennzeichnet, daß das Verhältnis Sand zu Epoxidharz im Bereich 25:1 bis 30:1 liegt.
